# EUROPÄISCHE PATENTANMELDUNG

(11) **EP 0 959 323 A2**
(43) Veröffentlichungstag der Anmeldung: **24.11.1999**
(21) Anmeldenummer: 99108520.0
(22) Anmeldetag: 04.05.1999
(51) Int. Cl.: G01B 7/06

(54) **Verfahren und Vorrichtung zur Messung der Dicke einer Zwischenschicht**

(30) Priorität: 20.05.1998 DE 19822739
(71) Anmelder: ALCAN DEUTSCHLAND GMBH, D-37075 Göttingen (DE)
(72) Erfinder: Lattner, Wolfgang, Dipl.-Ing., 44681 Castrop-Rauxel (DE)
(74) Vertreter: HOFFMANN - EITLE

(57) **Zusammenfassung**

Im Rahmen eines Verfahrens zur Messung der Dicke einer Zwischenschicht, die zwischen einer oberen und einer unteren elektrisch leitenden Schicht ausgebildet ist, insbesondere einer Siegelnaht eines versiegelten Behälters wird ein Pol einer Spannungsquelle (S) mit der oberen elektrisch leitenden Schicht (2) und der unteren elektrisch leitenden Schicht (4) verbunden. Eine Meßspitze (7) wird mit dem zweiten Pol der Spannungsquelle (S) verbunden. Mit der Meßspitze (7) wird eine Weg-Meßvorrichtung (M) verbunden. Die Meßspitze (7) wird in einer Richtung senkrecht zu der Oberfläche der oberen elektrisch leitenden Schicht (2) bewegt, so daß sie zunächst auf die Oberfläche der oberen elektrisch leitenden Schicht (2) trifft. Hierdurch wird der Stromkreis geschlossen, wobei der Beginn des Stromflusses den Beginn der Wegmessung durch die Weg-Meßvorrichtung auslöst. Des weiteren durchdringt die Meßspitze (7) die obere elektrisch leitende Schicht (2) und die Zwischenschicht (3). Schließlich trifft die Meßspitze (7) auf die untere elektrisch leitende Schicht (4), wobei der Beginn des Stromflusses die Wegmessung durch die Weg-Meßvorrichtung beendet. Die Schichtdicke wird durch die Weg-Meßvorrichtung (M) anhand des zwischen Beginn des Stromflusses durch die obere elektrisch leitende Schicht (2) und Beginn des Stromflusses durch die untere elektrisch leitende Schicht (4) erfaßten Weges, gegebenenfalls nach Subtraktion der Dicke der oberen elektrisch leitenden Schicht (2), ausgegeben.

Die erfindungsgemäße Vorrichtung weist eine Spannungsquelle, eine Meßspitze (7), eine auf die Meßspitze (7) wirkende Bewegungsvorrichtung, eine Einrichtung zur Erfassung des Beginns eines Stromflusses und eine Weg-Meßvorrichtung (M) auf.

## Beschreibung

### Technisches Gebiet

Die Erfindung betrifft ein Verfahren und eine Vorrichtung zur Messung der Dicke einer Zwischenschicht, die zwischen einer oberen und einer unteren elektrisch leitenden Schicht ausgebildet ist.

Das Verfahren und die Vorrichtung sind insbesondere bei der Messung der Schichtdicke einer Siegelnaht eines versiegelten Behälters anwendbar. Beispielsweise in der Nahrungsmittelindustrie sind Verpackungen bekannt, die aus Behältern bestehen, die aus Metall-Kunststoff-Verbundfolien ausgeführt sind. Nach dem Befüllen wird auf einen am oberen Rand umlaufenden Behälterflansch ein Deckel aufgelegt, der üblicherweise ebenfalls aus einer Metall- und insbesondere einer Aluminium-Verbundfolie besteht. Der aufgelegte Deckel wird mit dem Randflansch des Behälters versiegelt, so daß der Behälter dicht verschlossen wird. Hierbei kommt vor allem bei der Verpackung von Lebensmitteln der Güte der Siegelnaht eine große Bedeutung zu, da sich bei einer ungleichmäßigen Siegelnaht Undichtigkeiten einstellen können, welche die Haltbarkeit der verpackten Lebensmittel beeinträchtigen.

### Stand der Technik

Aus der von der Anmelderin eingereichten DE 196 42 768 C1 sind eine Vorrichtung und ein Verfahren zur zerstörungsfreien Messung von Schichtdicken bekannt, bei denen die Siegelmasse, die zumeist aus Polypropylen besteht, unter Druck und Temperatur weggeschmolzen wird. Die verbleibende Dicke des Meßbereichs wird dann mit der Ausgangsdicke verglichen, woraus als Meßergebnis die Schichtdicke errechnet wird.

Aus der DE 34 16 659 C2 ist eine Vorrichtung zur zerstörungsfreien Schichtdickenmessung von miteinander verschweißten oder versiegelten Metall-Kunststoff-Verbundfolien bekannt, bei der ebenfalls beheizbare Elektroden verwendet werden. Die beiden vorangehend beschriebenen Verfahren bzw. Vorrichtungen sind jedoch nur bei Behälter- und Deckelmaterialien verwendbar, die an ihrer Außenseite blank, d.h. nicht mit einem schmelzbaren Lack versehen sind. Bei den gängigen Behältern aus coextrudierten Folien oder Bändern, bei denen eine Metalleinlage üblicherweise beidseitig mit thermoplastischem Kunststoff beschichtet wird, sind diese Verfahren nicht anwendbar. Das Schmelzen der Außenbeschichtung würde nämlich das Meßergebnis erheblich verfälschen.

Aus der US 3,432,933 ist ein Meßinstrument bekannt, bei dem zwei Meßspitzen auf ein beschichtetes Objekt aufgesetzt werden, wodurch die Meßvorrichtung auf Null gesetzt wird. Durch das Niederdrücken der beiden Meßspitzen werden diese durch den Belag, dessen Dicke zu erfassen ist, gedrückt, bis sie in Kontakt mit dem darunter liegenden metallenen Objekt, beispielsweise einer Druckwalze, stehen. Zu diesem Zeitpunkt schließt sich ein Stromkreis, und das Meßergebnis wird als Funktion der für das Durchdringen des Belags erforderlichen Zeit ermittelt. Ein derartiger Aufbau unterliegt jedoch leicht Meßfehlern, da die beiden in einer Ebene liegenden Meßspitzen parallel zur Oberfläche des zu erfassenden Belags und des darunter liegenden metallenen Objekts aufgesetzt werden müssen. Wenn hier eine Schrägstellung einsetzt, wird das Meßergebnis erheblich verfälscht. Darüber hinaus ergibt sich bei dieser bekannten Vorrichtung im Fall von Materialdickenschwankungen kein zuverlässiges Meßergebnis.

### Darstellung der Erfindung

Der Erfindung liegt die Aufgabe zugrunde, ein Verfahren und eine Vorrichtung zur Messung von Schichtdicken zu schaffen, mittels derer eine einfache und genaue Ermittlung der Schichtdicke auch in dem Fall möglich ist, daß ein Material, das über der zu messenden Schicht angeordnet ist, mit schmelzbarem Lack oder ähnlichem beschichtet ist.

Die Lösung dieser Aufgabe erfolgt zum einen durch das im Anspruch 1 beschriebene Verfahren.

Demzufolge handelt es sich um ein Verfahren, mittels dessen die Messung der Dicke einer Zwischenschicht erfolgen kann, die zwischen einer oberen und einer unteren elektrisch leitenden Schicht ausgebildet ist. Dies trifft insbesondere auf die Siegelnaht eines versiegelten Behälters zu, bei dem das erfindungsgemäße Verfahren bevorzugt angewendet wird.

Im Rahmen des Verfahrens wird zunächst ein Pol einer Spannungsquelle sowohl mit der oberen als auch der unteren elektrisch leitenden Schicht verbunden. Mit dem anderen Pol der Spannungsquelle wird eine Meßspitze verbunden. Mit der Meßspitze wird eine Weg-Meßvorrichtung verbunden. Dann wird die Meßspitze in einer Richtung weitgehend senkrecht zur Oberfläche der oberen Schicht in Richtung der oberen Schicht bewegt. Folglich gelangt die Meßspitze zunächst an die Oberfläche der oberen elektrisch leitenden Schicht, so daß der Stromkreis durch die obere elektrisch leitende Schicht geschlossen wird. Hierbei wird der Beginn der Wegmessung mittels der Weg-Meßvorrichtung durch den Beginn des Stromflusses ausgelöst.

Nachfolgend durchdringt die Meßspitze die obere elektrisch leitende Schicht sowie die Zwischenschicht und trifft schließlich auf die untere elektrisch leitende Schicht, so daß der Stromkreis durch die untere elektrisch leitende Schicht geschlossen wird. Der Zeitpunkt des Beginns des Stromflusses durch die untere elektrisch leitende Schicht beendet die Wegmessung durch die Weg-Meßvorrichtung. Schließlich wird die Schichtdicke durch die Weg-Meßvorrichtung anhand des zwischen dem Schließen des ersten Stromkreises und dem Schließen des zweiten Stromkreises erfaßten Weges ausgegeben.

Hierbei kann es in bestimmten Anwendungsfällen ausreichend sein, die Dicke des Materials von der Oberfläche der oberen elektrisch leitenden Schicht, also beispielsweise des Deckels, bis zur Oberfläche des unteren elektrisch leitenden Materials, das den Behälter einschließlich des Behälterrandflansches bildet, zu ermitteln. In diesem Fall ergibt sich die genannte Schichtdicke ausschließlich anhand des genannten Weges. Ggf. kann im Speicher der verwendeten Recheneinheit die Dicke der oberen elektrisch leitenden Schicht, d.h. des Deckels hinterlegt werden, so daß ausschließlich die Dicke der Siegelnaht, die zwischen Deckel und Behälterrandflansch ausgebildet ist, ermittelt werden kann.

Bei dem erfindungsgemäßen Verfahren hat es auf die Meßwerte keinen Einfluß, wenn die verwendeten Metall- und insbesondere Aluminium-Verbundfolien mit schmelzbarem Lack beschichtet sind. Dieser wird beispielsweise im Fall des Deckels zu Beginn des Meßvorganges durchdrungen, und die Weg-Messung beginnt, sobald die Meßspitze auf die Oberfläche der oberen elektrisch leitenden Schicht, also der Metalleinlage des Deckels trifft. Alternativ ist es selbstverständlich denkbar, daß die Meßspitze an der Unterseite des Behälterrandflansches aufgesetzt und in Richtung Deckel bewegt wird. Aufgrund der Tatsache, daß eine einzige Meßspitze verwendet wird, deren Ausrichtung senkrecht zu der Oberfläche des Prüflings mit einfachen Mitteln gewährleistet werden kann, kann durch das erfindungsgemäße Verfahren eine äußerst genaue Messung erfolgen. Schließlich kann das erfindungsgemäße Verfahren mittels einer einfach aufgebauten Meßvorrichtung in wirtschaftlich vorteilhafter Art und Weise durchgeführt werden.

Bei bestimmten Anwendungsfällen kann die Wegmessung dadurch erfolgen, daß die Meßspitze mit einer definierten Geschwindigkeit bewegt wird, und der zu erfassende Weg anhand der definierten Geschwindigkeit der Meßspitze und der Zeitspanne zwischen dem Schließen des ersten Stromkreises und dem Schließen des zweiten Stromkreises erfolgt. Insbesondere wenn eine vergleichsweise große Wegstrecke zu erfassen ist, kann auch durch diese bevorzugte Ausführungsform eine Erfassung des Weges mit hoher Genauigkeit durchgeführt werden.

Die Lösung der der Erfindung zugrundeliegenden Aufgabe erfolgt zum anderen durch die im Anspruch 3 beschriebene Vorrichtung.

Diese weist eine Spannungsquelle auf, deren einer Pol über zwei Elektroden mit einer oberen und einer unteren elektrisch leitenden Schicht verbindbar ist. Mit dem anderen Pol der Spannungsquelle ist eine Meßspitze verbunden. Ferner ist eine auf die Meßspitze wirkende Bewegungsvorrichtung vorgesehen, die der Bewegung der Meßspitze dient. Des weiteren ist jeweils eine Einrichtung zur Erfassung des Beginns eines durch die erste bzw. die zweite Elektrode erfolgenden Stromflusses vorgesehen. Schließlich sorgt eine Weg-Meßvorrichtung mit einer Ausgabeeinrichtung für die Erfassung des von der Meßspitze zwischen Beginn des Stromflusses durch die obere elektrisch leitende Schicht und Beginn des Stromflusses durch die untere elektrisch leitende Schicht zurückgelegten Weges sowie für die Ausgabe dieses Weges. Hierbei kann gegebenenfalls, wie dies bei dem vorangehend beschriebenen Verfahren der Fall ist, die Dicke der oberen elektrisch leitenden Schicht subtrahiert werden, so daß die Dicke der Zwischenschicht alleine ausgegeben wird. Die beschriebene Vorrichtung sorgt bei einem einfachen Aufbau für eine genaue und zuverlässige Messung einer Schichtdicke, insbesondere der Dicke einer Siegelnaht zwischen einem Behälter und einem aufgelegten Deckel. Nach dem Eindrücken der Nadel, vorzugsweise mit einer definierten Kraft, kann die ermittelte Schichtdicke unmittelbar an dem Meßwertgeber angezeigt und auf einfache Weise abgelesen werden.

Bevorzugte Ausführungsformen der erfindungsgemäßen Vorrichtung sind in den weiteren Ansprüchen beschrieben.

In bestimmten Anwendungsfällen hat es sich als vorteilhaft erwiesen, eine Rechnereinheit vorzusehen, die den von der Meßspitze zurückgelegten Weg und somit die Schichtdicke anhand einer definierten Geschwindigkeit der Meßspitze und der Zeitspanne zwischen dem jeweiligen Beginn des Stromflusses durch die erste bzw. die zweite Elektrode, sowie ggf. der Dicke der oberen elektrisch leitenden Schicht ermittelt.

Vorzugsweise weist die Vorrichtung eine Einspannungseinrichtung auf, die an die Meßspitze benachbart angeordnet ist. Insbesondere in dieser Ausführungsform kann sichergestellt werden, daß die Meßspitze senkrecht zur Oberfläche des zu messenden Objekts in die obere elektrisch leitende Schicht eindringt. Da der Abstand zwischen der Meßspitze und der Einspannungseinrichtung, an der beispielsweise der Behälterrandflansch mit einer definierten Ausrichtung angebracht wird, sehr kurz gehalten wird, ist ein Verkanten oder eine Schrägstellung praktisch ausgeschlossen.

Obwohl für die Meßspitze beliebige geeignete Formen denkbar sind, wird für diese bevorzugt, daß sie als harte Metallnadel ausgeführt ist.

### Kurze Beschreibung der Zeichnungen

Nachfolgend wird die Erfindung anhand einer beispielhaft in den Zeichnungen dargestellten Ausführungsform näher erläutert. Es zeigen:
- Fig. 1: schematisch die erfindungsgemäße Meßvorrichtung in einem Anfangszustand;
- Fig. 2: schematisch die erfindungsgemäße Meßvorrichtung in einem ersten Zustand; und
- Fig. 3: schematisch die erfindungsgemäße Meßvorrichtung in einem zweiten Zustand.

### Ausführliche Beschreibung des bevorzugten Ausführungsbeispiels der Erfindung

Wie anhand der schematischen Darstellung in den Figuren zu erkennen ist, weist die erfindungsgemäße Meßvorrichtung eine Spannungsquelle S auf, deren einer Pol über zwei getrennte Leitungen 8, 9 und zwei Elektroden a, b an die obere elektrisch leitende Schicht 2 und die untere elektrisch leitende Schicht 4 verbunden ist. Der andere Pol der Spannungsquelle S ist mit einer Meßspitze in Form einer Metallnadel 7 angeschlossen. Die Metallnadel 7 ist ferner mit einem Meßwertgeber M verbunden.

Die geschichtete Anordnung, bei der es sich in dem gezeigten Fall um einen mit einer Folie 2 verschlossenen Behälter 6 handelt, ist im allgemeinen wie folgt aufgebaut. Die Deckelfolie 2 besteht aus einer Metall-, vorzugsweise einer Aluminiumfolie oder einem Aluminiumband, und ist mit einer Lackschicht 1 überzogen. Die Lackschicht 1 würde im Fall der Verwendung von beheizbaren Elektroden, die anstelle der Metallnadel 7 in den Schichtenaufbau eindringen, schmelzen, was die Meßergebnisse hinsichtlich der zu erfassenden Schichtdicke verfälschen würde. Aus diesem Grund eignen sich herkömmliche Verfahren nicht für die Erfassung der Schichtdicke der Siegelnaht 3 unterhalb einer beispielsweise mit Lack beschichteten Folie 2.

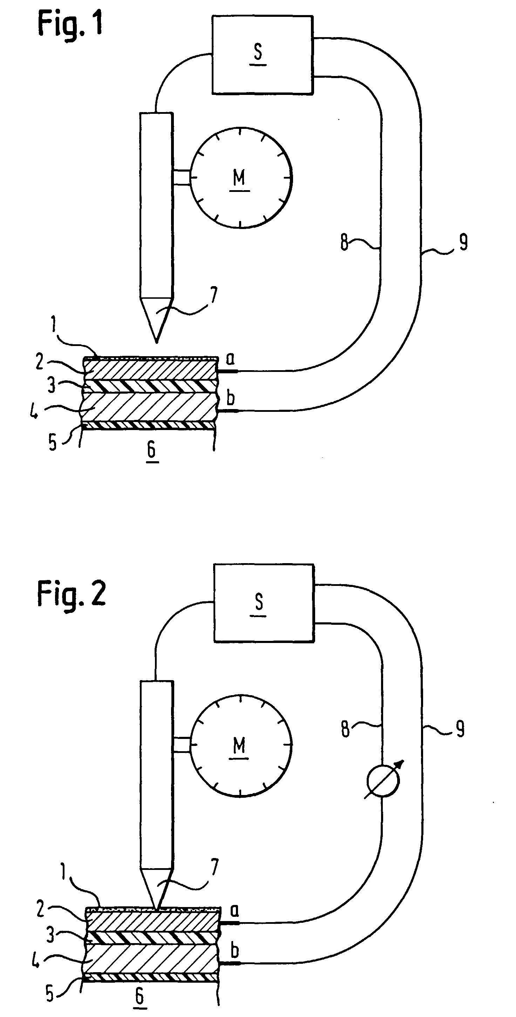

Wie bereits erwähnt, und wie in der Figur zu erkennen, befindet sich die Zwischenschicht, bei dem gezeigten Ausführungsbeispiel in Form der Siegelnaht 3, die üblicherweise aus Polypropylen ausgebildet ist, zwischen der elektrisch leitenden Deckelfolie 2 und der unteren elektrisch leitenden Schicht 4, die bei dem gezeigten Beispiel durch die Metall-, vorzugsweise Aluminiumfolie oder dem -band gebildet wird, aus der/dem der verschlossene Behälter gefertigt ist. In dem in Fig. 1 gezeigten Anfangszustand ist zwischen dem vorderen Ende der Metallnadel 7 und den Elektroden a, b kein Stromkreis geschlossen, so daß kein Stromfluß erfaßt werden kann.

Wenn nunmehr, wie in Fig. 2 angedeutet ist, die Metallnadel 7 in einer Richtung senkrecht zur Oberfläche der Folie 2 vorzugsweise mit definierter Geschwindigkeit und unter definierter Krafteinwirkung bewegt wird, so durchdringt die Spitze der Metallnadel 7 zunächst die Lackschicht 1. Sobald die Spitze der Metallnadel 7 auf die Oberfläche der oberen elektrisch leitenden Schicht 2 trifft, wird der Stromkreis geschlossen, der von dem einen Pol der Spannungsquelle S durch die Leitung 8 zu der Elektrode a, durch die obere elektrisch leitende Schicht 2, durch die Metallnadel 7 und schließlich zu dem anderen Pol der Spannungsquelle S verläuft. In diesen Stromkreis kann somit ein Stromfluß erfaßt werden, was durch das in die Leitung 8 eingezeichnete Meßgerät angedeutet werden soll. Im Rahmen des erfindungsgemäßen Meßverfahrens wird der Beginn des Stromflusses erfaßt. Insbesondere wird ein Einschaltkontakt des Meßwertgebers M ausgelöst.

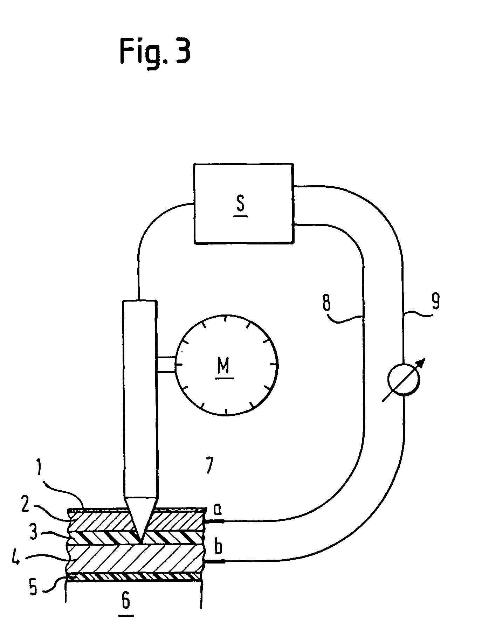

Die Metallnadel 7 wird jedoch weiter mit definierter Geschwindigkeit in einer Richtung senkrecht zu den jeweiligen Schichtenoberflächen in Richtung der unteren elektrisch leitenden Schicht 4 gedrückt. Wie in Fig. 3 dargestellt ist, trifft die Spitze der Metallnadel 7, nachdem sie die obere elektrisch leitende Schicht 2 und die Zwischenschicht 3 durchdrungen hat, auf die Oberfläche der unteren elektrisch leitenden Schicht 4. Zu diesem Zeitpunkt wird der andere Stromkreis geschlossen, der von dem einen Pol der Spannungsquelle durch die Leitung 9 zu der Elektrode b, durch die elektrisch leitende Schicht 4, durch die Metallnadel 7 und schließlich zu dem anderen Pol der Spannungsquelle S verläuft. Der folglich meßbare Stromfluß in diesem Stromkreis, was durch das in die Leitung 9 in Fig. 3 eingezeichnete Meßgerät angedeutet werden soll, schließt den Endkontakt des Meßwertgebers M und beendet die Messung. Mit anderen Worten wird der zwischen den beiden Zeitpunkten, zu denen der erste und der zweite Stromkreis jeweils geschlossen wird, von der Meßspitze zurückgelegte Weg erfaßt und von einer Anzeigeeinrichtung des Meßwertgebers M ausgegeben.

Alternativ kann die Zeit erfaßt werden, welche die Spitze der Metallnadel 7 vom Auftreffen auf die Oberfläche der oberen elektrisch leitenden Schicht 2 bis zum Auftreffen auf die Oberfläche der unteren elektrisch leitenden Schicht 4 benötigt. Zusammen mit dem Wert der definierten Geschwindigkeit, mit der die Metallnadel 7 bewegt wird, kann nunmehr die Schichtdicke der oberen elektrisch leitenden Schicht 2 einschließlich der Dicke der Siegelmasse in der Siegelnaht 3 errechnet werden. Ggf. kann in einer geeigneten Speichereinrichtung die Dicke der oberen elektrisch leitenden Schicht 2 hinterlegt werden, so daß ohne weiteres lediglich die Dicke der Schicht 3 ermittelt werden kann. Der Meßwertgeber M gibt die zu erfassende Schichtdicke unmittelbar aus. Alternativ könnte die Meßspitze 7 so gestaltet werden, daß ein Ende des Stromflusses durch die obere Schicht 2 erfaßbar ist. In diesem Fall kann die Dicke der Schicht 3 unmittelbar errechnet werden.

Bei einem äußerst einfachen Aufbau sorgt die in den Figuren schematisch dargestellte Meßvorrichtung im Rahmen eines mit einfachen Mitteln durchführbaren Verfahrens für eine zuverlässige Messung der Dicke einer Schicht 3 zwischen zwei elektrisch leitenden Schichten 2, 4. Hierbei wird die Messung auch durch etwaige Beschichtungen der elektrisch leitenden Schichten 2, 4 nicht beeinträchtigt, da diese nicht geschmolzen, sondern durch das spitze Ende der Metallnadel 7 lediglich durchdrungen werden. Da die Einspannstelle des geschichteten Materials, also bevorzugt des Behälterrandflansches eines mit einer Folie versiegelten Behälters in vorteilhafter Weise in unmittelbarer Nähe derjenigen Stelle angeordnet werden kann, an der die Metallnadel 7 eindringt, können ferner keine Beeinträchtigungen der Meßergebnisse durch ein schräges Eindringen oder dergleichen auftreten. Es sei noch angemerkt, daß in dem gezeigten Fall der Behälter an seiner Außenseite mit einer weiteren Polypropylenschicht 5 beschichtet ist, die in den Figuren an der Unterseite des schematisch dargestellten Schichtaufbaus des Behälterrandflansches zu erkennen ist.

## Patentansprüche

1. Verfahren zur Messung der Dicke einer Zwischenschicht, die zwischen einer oberen und einer unteren elektrisch leitenden Schicht ausgebildet ist, insbesondere einer Siegelnaht eines versiegelten Behälters, mit folgenden Schritten:
- Verbinden des einen Pols einer Spannungsquelle sowohl mit der oberen als auch der unteren elektrisch leitenden Schicht,
- Verbinden einer Meßspitze mit dem anderen Pol der Spannungsquelle,
- Verbinden einer Weg-Meßvorrichtung mit der Meßspitze,
- Bewegen der Meßspitze in einer Richtung weitgehend senkrecht zu der Oberfläche der oberen elektrisch leitenden Schicht
- an die Oberfläche der oberen elektrisch leitenden Schicht, so daß der durch die obere elektrisch leitende Schicht verlaufende Stromkreis geschlossen wird, wobei der Beginn des Stromflusses den Beginn der Wegmessung durch die Weg-Meßvorrichtung auslöst,
- weiter durch die obere elektrisch leitende Schicht und die Zwischenschicht hindurch und
- an die Oberfläche der unteren elektrisch leitenden Schicht, so daß der durch die untere elektrisch leitende Schicht verlaufende Stromkreis geschlossen wird, wobei der Beginn des Stromflusses die Wegmessung durch die Weg-Meßvorrichtung beendet,
- Ausgeben der Schichtdicke durch die Weg-Meßvorrichtung anhand des zwischen dem Beginn des Stromflusses durch die obere elektrisch leitende Schicht und dem Beginn des Stromflusses durch die untere elektrisch leitende Schicht erfaßten Weges, gegebenenfalls nach Subtraktion der Dicke der oberen elektrisch leitenden Schicht.

2. Verfahren nach Anspruch 1,
dadurch **gekennzeichnet,** daß
die Meßspitze mit einer definierten Geschwindigkeit bewegt wird, und die Wegmessung anhand der Erfassung der Zeitspanne zwischen Beginn des Stromflusses durch die obere elektrisch leitende Schicht und Beginn des Stromflusses durch die untere elektrisch leitende Schicht und nachfolgendem Errechnen des Weges anhand der definierten Geschwindigkeit der Meßspitze erfolgt.

3. Vorrichtung zur Messung der Dicke einer Zwischenschicht, die zwischen einer oberen und einer unteren elektrisch leitenden Schicht ausgebildet ist, insbesondere einer Siegelnaht eines versiegelten Behälters, mit:
- einer Spannungsquelle (S), deren einer Pol über zwei Elektroden (a, b) mit der oberen elektrisch leitenden Schicht (2) und der unteren elektrisch leitenden Schicht (4) verbindbar ist,
- einer Meßspitze (7), die mit dem zweiten Pol der Spannungsquelle (S) verbunden ist,
- einer auf die Meßspitze (7) wirkenden Bewegungsvorrichtung zum Bewegen der Meßspitze (7) in einer Richtung weitgehend senkrecht zu der Oberfläche der oberen elektrisch leitenden Schicht (2),
- einer Einrichtung zur Erfassung des Beginns eines durch die obere elektrisch leitende Schicht (2) und eines durch die untere elektrisch leitende Schicht (4) erfolgenden Stromflusses, und
- einer Weg-Meßvorrichtung (M) mit einer Ausgabeeinrichtung zur Erfassung des von der Meßspitze (7) zwischen Beginn des Stromflusses durch die obere elektrisch leitende Schicht und Beginn des Stromflusses durch die untere elektrisch leitende Schicht zurückgelegten Weges und zur Ausgabe dieses Weges gegebenenfalls nach Subtraktion der Dicke der oberen elektrisch leitenden Schicht.

4. Vorrichtung nach Anspruch 3,
dadurch **gekennzeichnet,** daß
eine Rechnereinheit vorgesehen ist, die den zurückgelegten Weg anhand der Zeitspanne zwischen Beginn des Stromflusses durch die obere elektrisch leitende Schicht (2) und Beginn des Stromflusses durch die untere elektrisch leitende Schicht (4) und einer definierten Geschwindigkeit errechnet, mit der die Meßspitze (7) bewegbar ist.

5. Vorrichtung nach Anspruch 3 oder 4,
dadurch **gekennzeichnet,** daß
in der unmittelbaren Umgebung der Meßspitze (7) eine Einspannungseinrichtung für das Meßobjekt vorgesehen ist.

6. Vorrichtung nach einem der Ansprüche 3 bis 5,
dadurch **gekennzeichnet,** daß
die Meßspitze als harte Metallnadel (7) ausgebildet ist.
